# EUROPEAN PATENT APPLICATION

(11) **EP 4 834 985 A1**
(43) Date of publication of application: **04.11.2026**
(21) Application number: 25172945.5
(22) Date of filing: 28.04.2025
(51) Int. Cl.: C08K 7/14

(54) **POLYBUTYLENE TEREPHTHALATE-BASED COMPOSITIONS WITH HIGH STIFFNESS AND LOW DIELECTRIC CONSTANT**

(71) Applicant: SHPP Global Technologies B.V., 4612 PX Bergen op Zoom (NL)
(72) Inventor: WANG, Jian, Shanghai, 201319 (CN); CHENG, Yunan, Shanghai, 201319 (CN); ZHENG, Yun, Shanghai, 201319 (CN)
(74) Representative: Modiano, Gabriella Diana

(57) **Abstract**

Thermoplastic compositions include: (a) from about 35 wt% to about 80 wt% of a polybutylene terephthalate (PBT) resin; (b) from about 3 wt% to about 15 wt% of an amorphous resin; (c) from about 10 wt% to about 45 wt% of a flat glass fiber; (d) from about 10 wt% to about 45 wt% of a high tensile strength glass fiber having a tensile modulus of at least 90 gigapascals (GPa) as evaluated in accordance with ASTM D2343, wherein the high tensile strength glass fiber is different from the flat glass fiber; and (e) from about 2 wt% to about 10 wt% of an impact modifier. The combined weight percent value of all components does not exceed 100 wt%, and all weight percent values are based on the total weight of the composition. The compositions have good modulus, dielectric and/or warpage properties.

## Description

### FIELD OF THE DISCLOSURE

The present disclosure relates to polybutylene terephthalate (PBT) compositions, and in particular to PBT compositions that include a flat glass fiber and a high tensile strength glass fiber; the compositions have improved modulus, dielectric and/or warpage properties.

### BACKGROUND OF THE DISCLOSURE

With the fast development of the smartphone industry, it is desirable for smartphone thicknesses to be reduced. As a result, the components of the smartphone must be stiffer (i.e., higher modulus). Combined with the metals like aluminum or titanium, glass fiber-filled polybutylene terephthalate (PBT) compositions are widely used as the middle frame solution for high-end smartphones using the advanced and convenient nano-molding technology (NMT) process.

A smartphone middle frame which is used as the antenna split must have good dielectric properties in addition to good modulus properties. To facilitate smartphone designers, it is desirable to maintain dielectric properties-dielectric constant (Dk) and dissipation factor (Df)-while increasing modulus properties as compared to conventional glass-fiber filled PBT compositions.

In general, higher modulus requires higher filler (e.g., glass fiber) content. However, increasing filler content generally results in a higher Dk property. Therefore, it is difficult to develop a material with higher stiffness while maintaining its Dk property.

These and other shortcomings are addressed by aspects of the present disclosure.

### SUMMARY

Aspects of the disclosure relate to thermoplastic compositions including: (a) from about 35 wt% to about 80 wt% of a polybutylene terephthalate (PBT) resin; (b) from about 3 wt% to about 15 wt% of an amorphous resin; (c) from about 10 wt% to about 45 wt% of a flat glass fiber; (d) from about 10 wt% to about 45 wt% of a high tensile strength glass fiber having a tensile modulus of at least 90 gigapascals (GPa) as evaluated in accordance with ASTM D2343, wherein the high tensile strength glass fiber is different from the flat glass fiber; and (e) from about 2 wt% to about 10 wt% of an impact modifier. The combined weight percent value of all components does not exceed 100 wt%, and all weight percent values are based on the total weight of the composition. The compositions have good modulus, dielectric and/or warpage properties.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

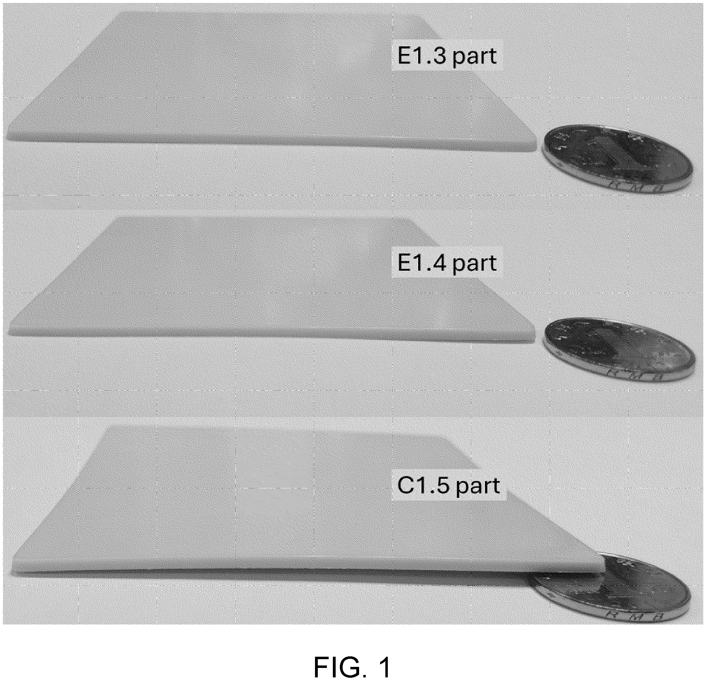

FIG. 1 is an image comparing warpage properties of a molded sample of a comparative composition and molded samples of example compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a PBT polymer" includes mixtures of two or more PBT polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 35 wt% to about 80 wt% of a polybutylene terephthalate (PBT) resin; (b) from about 3 wt% to about 15 wt% of an amorphous resin; (c) from about 10 wt% to about 45 wt% of a flat glass fiber; (d) from about 10 wt% to about 45 wt% of a high tensile strength glass fiber having a tensile modulus of at least 90 gigapascals (GPa) as evaluated in accordance with ASTM D2343, wherein the high tensile strength glass fiber is different from the flat glass fiber; and (e) from about 2 wt% to about 10 wt% of an impact modifier. The combined weight percent value of all components does not exceed 100 wt%, and all weight percent values are based on the total weight of the composition.

The PBT resin may include virgin PBT, chemically upcycled PBT, mechanically recycled PBT, or a combination thereof. An example of a chemically upcycled PBT is iQ PBT, available from SABIC.

The composition includes from about 35 wt% to about 80 wt% of the PBT resin. In some aspects the composition includes at least 35 wt%, or at least 40 wt%, or at least 45 wt%, or at least 50 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, of the PBT resin.

The amorphous resin may include, but is not limited to, polycarbonate, polyetherimide, copolymers thereof, or a combination thereof. In certain aspects the polycarbonate includes virgin polycarbonate, post-consumer recycled polycarbonate, a polycarbonate copolymer, or a combination thereof.

The polycarbonate copolymer may include a copolyestercarbonate in some aspects. The copolyestercarbonate copolymer may include ester units of the formula 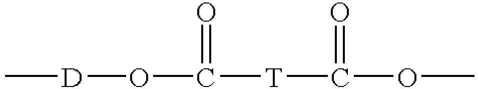 wherein D is a divalent group derived from a dihydroxy compound, and may be, for example, a C₂₋₃₀ alkylene group, a C₃₋₃₀ alicyclic group, a C₆₋₃₀ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a C₂₋₃₀ alkylene group, a C₆₋₃₀ alicyclic group, a C₆₋₃₀ alkyl aromatic group, or a C₆₋₃₀ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a C₂₋₆ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula 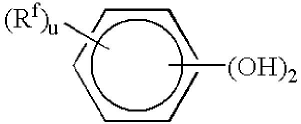 wherein each R^{f} is independently C₁₋₁₂ alkyl, or halogen, and u is 0 to 4. It will be understood that R^{f} is hydrogen when u is 0. Typically, the halogen can be chlorine or bromine. In an aspect, compounds in which the -OH groups are substituted meta to one another, and wherein R^{f} and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination of isophthalate esters, terephthalate esters, and resorcinol esters. In a specific aspect, isophthalate-terephthalate-resorcinol ester units include a combination of isophthalate-resorcinol ester units and terephthalate-resorcinol ester units. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below: 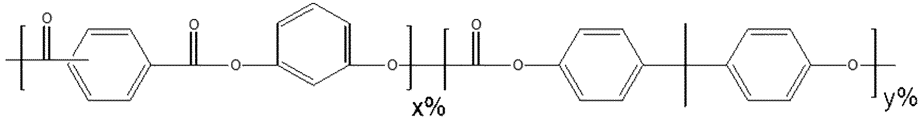 wherein x is the mole % of the ITR ester block and y is the mole % of the polycarbonate block. An exemplary copolyestercarbonate copolymer is SLX 20/80 resin, available from SABIC. SLX 20/80 includes 20 mole % ITR blocks and 80 mole % PC blocks.

In yet further aspects the copolyestercarbonate copolymer has a mole % ratio of ITR ester units to polycarbonate monomer units of from about 15:85 to about 95:5, or from about 20:80 to about 90:10, or from about 15:85 to about 25:75, or from about 18:82 to about 22:78, or about 20:80, or from about 85:15 to about 95:5, or from about 88:12 to about 92:8, or about 90:10.

The composition includes from about 3 wt% to about 15 wt% of the amorphous resin. In further aspects the composition includes at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the amorphous resin.

The flat glass fiber may include E-glass fiber in some aspects. In certain aspects the flat glass fiber has an aspect ratio-defined as the ratio of the major axis length (the longer dimension of the flattened oval or rectangle) to the minor axis length (the shorter dimension)-of at least 2. In further aspects the flat glass fiber has an aspect ratio of from 2-8, or at least 2, or at least 3, or at least 4, or at least 5, or at least 6, or at most 8, or at most 7, or at most 6, or at most 5.

The composition includes from about 10 wt% to about 45 wt% of the flat glass fiber. In further aspects the composition includes at least 10 wt%, or at least 15 wt%, or at least 20 wt%, or at least 25 wt%, or at least 30 wt%, or at least 35 wt%, or at most 45 wt%, or at most 40 wt%, or at most 35 wt%, or at most 30 wt%, or at most 25 wt%, or at most 20 wt%, of the flat glass fiber.

The composition includes from about 10 wt% to about 45 wt% of a high tensile strength glass fiber having a tensile modulus of at least 90 gigapascals (GPa) as evaluated in accordance with ASTM D2343. In further aspects the high tensile strength glass fiber has a tensile modulus of at least 90 GPa, or at least 95 GPa, or at least 100 GPa, or at least 105 GPa, or at least 110 GPa, or at least 115 GPa, or at least 120 GPa, or at least 125 GPa, or at least 130 GPa, or at least 135 GPa, or at least 140 GPa, or at least 145 GPa, or at least 150 GPa, or at most 250 GPa, or at most 225 GPa, or at most 200 GPa, or at most 175 GPa, or at most 150 GPa.

The high tensile strength glass fiber is a round glass fiber in some aspects.

In certain aspects the high tensile strength glass fiber has a dielectric constant (Dk) of less than 6 as evaluated according to ASTM D150 at a frequency of from 1-10 gigahertz (GHz). In further aspects the high tensile strength glass fiber has a Dk of less than 5.5, or less than 5, or less than 4.5, or at least 1, or at least 2, or at least 3, or at least 4, or at least 4.5.

The composition includes from about 10 wt% to about 45 wt% of the high tensile strength glass fiber. In some aspects the composition includes at least 10 wt%, or at least 15 wt%, or at least 20 wt%, or at least 25 wt%, or at least 30 wt%, or at most 45 wt%, or at most 40 wt%, or at most 35 wt%, or at most 30 wt%, or at most 25 wt%, or at most 20 wt%, or at most 15 wt%, of the high tensile strength glass fiber.

In a specific aspect the composition does not include a low dielectric constant (Dk)/low dissipation factor (Df) glass fiber instead of the high tensile glass fiber. A low Dk glass fiber has relatively low modulus properties as compared to the high tensile glass fiber, so it may not be suitable to replace the high tensile glass fiber in certain applications.

The flat glass fiber and high tensile strength glass fiber may be present in the composition in a weight ratio of from 1:5 to 5:1. In further aspects the flat glass fiber and high tensile strength glass fiber may be present in the composition in a weight ratio of 1:5, or 1:4.5, or 1:4, or 1:3.5, or 1:3, or 1:2.5, or 1:2, or 1:1.5, 1:1.25, or 1:1, or 1.25:1, or 1.5:1, or 2:1, or 2.5:1, or 3:1, or 3.5:1, or 4:1, or 4.5:1, or 5:1, or any range of ratios between these ratios.

The composition includes from about 2 wt% to about 10 wt% of the impact modifier. The impact modifier may include, but is not limited to, ethylene-methyl acrylate-glycidyl methacrylate (E-MA-GMA) terpolymer, ethylene-glycidyl methacrylate (E-GMA) copolymer, styrene-ethylene-butylene-styrene (SEBS), ethylene-acrylic acid zinc ionomer, or a combination thereof.

In certain aspects the composition includes at least 2 wt%, or at least 3 wt%, or at least 4 wt%, or at least 5 wt%, or at least 6 wt%, or at least 7 wt%, or at least 8 wt%, or at most 10 wt%, or at most 9 wt%, or at most 8 wt%, or at most 7 wt%, or at most 6 wt%, or at most 5 wt%, of the impact modifier.

Compositions according to aspects of the disclosure may include at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, an additional reinforcing agent, or a combination thereof.

The at least one additional additive, if present, may be included in the composition in an amount of from greater than 0 wt% to about 10 wt%. In specific aspects the composition comprises at least 0.01 wt%, or at least 0.05 wt%, or at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, of the at least one additional additive.

### Properties

Metal bonding strength is used to evaluate NMT performance. In NMT processes plastic resin is injected onto a metal surface that is treated by a special chemical solution. This NMT process is developed from the integration technology of metal and plastics. It allows for manufacture of certain parts of consumer products and replaces the traditional insert molding or die casting process.

In certain aspects the composition has comparable NMT bonding strength as compared to a reference composition that does not include the high tensile strength glass fibers, wherein NMT bonding strength is evaluated according to ISO 19095. The metal may be pre-treated with a metal surface treatment, which may include one of two major processes: T (Taiseiplas)-treatment and TRI (Technology Rising from IWATE)-treatment. These methods were developed by different companies in Japan. Metals such as, but not necessarily limited to, aluminum and titanium may be used as the metal in the treatment.

In specific aspects the composition has an NMT bonding strength of at least 28 MPa, or at least 28.5 MPa, or at least 29 MPa, or at least 29.5 MPa, or at least 30 MPa, or at least 30.5 MPa, or at least 31 MPa, or at least 31.5 MPa, or at least 32 MPa, or at least 32.5 MPa, or at least 33 MPa, or at least 33.5 MPa, or at least 34 MPa, or at most 50 MPa, or at most 45 MPa, or at most 40 MPa, as evaluated according to ISO 19095 using a T-treatment or TRI-treatment.

Plaques molded from the disclosed composition may exhibit good warpage properties. Warpage can be defined as a dimensional distortion in a molded product after it is ejected from the mold at the end of the injection molding process. With an increasing focus on thin-walled products, control over the dimensional stability becomes increasingly important. For example, a molded sample may exhibit a lower warpage as compared to a reference molded sample that does not include the flat glass fiber. In further aspects, warpage may be determined by observing the magnitude (visually or quantitatively) of lift off away from a planar surface at which a molded part including the composition is placed.

Warpage may be evaluated on a 100 mm x 100 mm x 2.0 mm molded sample according to a SABIC Method, in which: the sample is placed on a flat surface; a corner of the sample is pressed into the surface elevating the remaining corners; the magnitude of the distance of the other corners to the flat surface is measured; and the maximum distance of the measurements is recorded as the warpage of the sample.

Thus, in some aspects a molded sample of the composition exhibits a lower warpage than the warpage observed for a reference molded sample that does not include the flat glass fiber, wherein warpage is determined according to the SABIC Method. In specific aspects a molded sample including the polymer composition may exhibit a warpage of less than 1.8 mm, or less than 1.7 mm, or less than 1.6 mm, or less than 1.5 mm, or less than 1.4 mm, or less than 1.3 mm, or less than 1.2 mm, or less than 1.1 mm, or less than 1.0 mm, or less than 0.9 mm, or less than 0.8 mm, or less than 0.7 mm, or less than 0.6 mm, or less than 0.5 mm, or less than 0.4 mm, or less than 0.3 mm, or less than 0.2 mm, or less than 0.1 mm, at a thickness of 2.0 mm, as determined according to the SABIC Method.

Compositions according to aspects of the disclosure may have a flexural modulus of at least 12 gigapascals (GPa) as evaluated according to ASTM D790 at a sample thickness of 3.2 millimeters (mm) and a speed of 1.27 mm per minute. In some aspects the composition has a flexural modulus of at least 12.1 GPa, at least 12.2 GPa, at least 12.3 GPa, at least 12.4 GPa, at least 12.5 GPa, at least 12.6 GPa, at least 12.7 GPa, at least 12.8 GPa, at least 12.9 GPa, at least 13 GPa, or at most 20 GPa, or at most 19 GPa, or at most 18 GPa, or at most 17 GPa, or at most 16 GPa, or at most 15 GPa, or at most 14 GPa, as evaluated according to ASTM D790 at a sample thickness of 3.2 millimeters (mm) and a speed of 1.27 mm per minute.

In certain aspects compositions according to aspects of the disclosure have a tensile modulus of at least 13 GPa as evaluated according to ASTM D638 at a test speed of 5 millimeters per minute. In particular aspects, the composition has a tensile modulus of at least 13.1 GPa, or at least 13.2 GPa, or at least 13.3 GPa, or at least 13.4 GPa, or at least 13.5 GPa, or at least 13.6 GPa, or at least 13.7 GPa, or at least 13.8 GPa, or at least 13.9 GPa, or at least 14 GPa, or at least 14.1 GPa, or at least 14.2 GPa, or at least 14.3 GPa, or at least 14.4 GPa, or at least 14.5 GPa, or at least 14.6 GPa, or at most 15.6 GPa, or at most 15.5 GPa, or at most 15.4 GPa, or at most 15.3 GPa, or at most 15.2 GPa, or at most 15.1 GPa, or at most 15 GPa, as evaluated according to ASTM D638 at a test speed of 5 millimeters per minute.

In further aspects the composition has a dielectric constant (Dk) of no more than 3.9 as evaluated according to the SABIC Method at 1.9 gigahertz (GHz). In certain aspects the composition has a Dk of no more than 3.89, or no more than 3.88, or no more than 3.87, or no more than 3.86, or no more than 3.85, or no more than 3.84, or no more than 3.83, or no more than 3.82, or no more than 3.81, or no more than 3.8, or no more than 3.79, or no more than 3.78, or no more than 3.77, or no more than 3.76, or no more than 3.75, or no more than 3.74, or no more than 3.73, or no more than 3.72, or at least 1, or at least 1.5, or at least 2, or at least 2.5, or at least 3, as evaluated according to the SABIC Method at 1.9 gigahertz (GHz).

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded.

In specific aspects, the article is a component of a smartphone, such as a middle frame and/or antenna split for a smartphone.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 35 wt% to about 80 wt% of a polybutylene terephthalate (PBT) resin;
b) from about 3 wt% to about 15 wt% of an amorphous resin;
c) from about 10 wt% to about 45 wt% of a flat glass fiber;
d) from about 10 wt% to about 45 wt% of a high tensile strength glass fiber having a tensile modulus of at least 90 gigapascals (GPa) as evaluated in accordance with ASTM D2343, wherein the high tensile strength glass fiber is different from the flat glass fiber; and
e) from about 2 wt% to about 10 wt% of an impact modifier,
wherein the combined weight percent value of all components does not exceed 100 wt%, and all weight percent values are based on the total weight of the composition.

Aspect 2. The thermoplastic composition according to Aspect 1, wherein the PBT resin comprises virgin PBT, chemically upcycled PBT, mechanically recycled PBT, or a combination thereof.

Aspect 3. The thermoplastic composition according to Aspect 1 or 2, wherein the amorphous resin comprises polycarbonate, polyetherimide, copolymers thereof, or a combination thereof.

Aspect 4. The thermoplastic composition according to Aspect 3, wherein the polycarbonate comprises virgin polycarbonate, post-consumer recycled polycarbonate, a polycarbonate copolymer, or a combination thereof.

Aspect 5. The thermoplastic composition according to Aspect 4, wherein the polycarbonate copolymer comprises isophthalate-terephthalate-resorcinol (ITR) blocks and polycarbonate blocks.

Aspect 6. The thermoplastic composition according to any one of Aspects 1 to 5, wherein the flat glass fiber comprises E-glass fiber.

Aspect 7. The thermoplastic composition according to any one of Aspects 1 to 6, wherein the flat glass fiber has an aspect ratio of greater than 2.

Aspect 8. The thermoplastic composition according to any one of Aspects 1 to 7, wherein the flat glass fiber does not comprise a low dielectric constant (Dk)/low dissipation factor (Df) fiber.

Aspect 9. The thermoplastic composition according to any one of Aspects 1 to 8, wherein the impact modifier comprises ethylene-methyl acrylate-glycidyl methacrylate (E-MA-GMA) terpolymer, ethylene-glycidyl methacrylate (E-GMA) copolymer, styrene-ethylene-butylene-styrene (SEBS), ethylene-acrylic acid zinc ionomer, or a combination thereof.

Aspect 10. The thermoplastic composition according to any one of Aspects 1 to 9, wherein the composition further comprises from greater than 0 wt% to about 10 wt% of at least one additional additive.

Aspect 11. The thermoplastic composition according to Aspect 10, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, an additional reinforcing agent, or a combination thereof.

Aspect 12. The thermoplastic composition according to any one of Aspects 1 to 11, wherein the high tensile strength glass fiber is a round glass fiber.

Aspect 13. The thermoplastic composition according to any one of Aspects 1 to 12, wherein the high tensile strength glass fiber has a dielectric constant (Dk) of less than 6 as evaluated according to ASTM D150 at a frequency of from 1-10 gigahertz (GHz).

Aspect 14. The thermoplastic composition according to any one of Aspects 1 to 13, wherein a weight ratio of the flat glass fiber to the high tensile strength glass fiber is from 1:5 to 5:1.

Aspect 15. The thermoplastic composition according to any one of Aspects 1 to 14, wherein the composition has a metal bonding strength of at least 28 megapascals as evaluated according to ISO 19095 using a T-treatment or TRI-treatment.

Aspect 16. The thermoplastic composition according to any one of Aspects 1 to 15, wherein the composition has a flexural modulus of at least 12 gigapascals (GPa) as evaluated according to ASTM D790 at a sample thickness of 3.2 millimeters (mm) and a speed of 1.27 mm per minute.

Aspect 17. The thermoplastic composition according to any one of Aspects 1 to 16, wherein the composition has a dielectric constant of no more than 3.9 as evaluated according to the SABIC Method at 1.9 gigahertz (GHz).

Aspect 18. The thermoplastic composition according to any one of Aspects 1 to 17, wherein the composition has a warpage no more than 1.8 mm as evaluated according to the SABIC Method.

Aspect 19. The thermoplastic composition according to any one of Aspects 1 to 18, wherein the composition has a tensile modulus of at least 13 GPa as evaluated according to ASTM D638 at a test speed of 5 millimeters per minute.

Aspect 20. An article comprising the thermoplastic composition according to any one of Aspects 1 to 19.

Aspect 21. The article according to Aspect 20, wherein the article is a component of a smartphone.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Example and comparative compositions described herein included one or more of the components listed in Table 1:

**Table 1 - Components**

| **Component** | **Description** | **Source** |
|---|---|---|
| PBT | PBT195, low viscosity, 1200-211D | Chang Chun Chemical |
| PC | Polycarbonate homopolymer | SABIC |
| FGF | Flat glass fiber, CSG 3PA-830 | Nittobo |
| HTGF | High tensile glass fiber, ECS303-3-H/HT, round | CPIC |
| AX8900 | SK Lotader AX8900, ethylene-methyl acrylate-glycidyl methacrylate terpolymer (E-MA-GMA) | SK Functional Polymer |
| MZP | Mono zinc phosphate | Budenheim |
| PETS | Pentaerythritol tetrastearate | FACI |
| UV | UV stabilizer UV234 | BASF |
| Irg1010 | Antioxidant Irganox^{®} 1010 | BASF |
| Irg168 | Phosphite stabilizer Irgafos^{®} 168 | BASF |

The compositions were extruded into pellets according to the conditions in Table 2, and samples were injection molded according to the conditions in Table 3:

**Table 2 - Extrusion Profile**

| **Parameters** | **Unit** | **Condition** |
|---|---|---|
| Compounder Type | NONE | TEM-37BS |
| Barrel Size | mm | 1500 |
| Die | mm | 4 |
| Zone 1 Temp | °C | 100 |
| Zone 2 Temp | °C | 200 |
| Zones 3-5 Temp | °C | 250 |
| Zone 6-11 Temp | °C | 260 |
| Die Temp | °C | 260 |
| Screw speed | rpm | 200 |
| Throughput | kg/hr | 40 |
| Torque | % | 50-60 |
| Vacuum 1 | bar | -0.08 |
| Side Feeder 1 speed | rpm | 250 |
| Melt temperature | °C | 265-275 |

**Table 3 - Molding Profile**

| **Parameters** | **Unit** | **Condition** |
|---|---|---|
| Pre-drying time | Hour | 4 |
| Pre-drying temp | °C | 120 |
| Molding Machine | NONE | FANUC SE180 |
| Mold Type (insert) | NONE | Tensile, Flexural, and IZOD bars 100×100×2.0 mm part |
| Hopper temp | °C | 50 |
| Zone 1 temp | °C | 240-250 |
| Zone 2 temp | °C | 250-260 |
| Zone 3 temp | °C | 260-270 |
| Nozzle temp | °C | 240-260 |
| Mold temp | °C | 120-150 |
| Screw speed | rpm | 100 |
| Back pressure | kgf/cm² | 30-60 |
| Cooling time | s | 15-30 |
| Injection speed | mm/s | 50-100 |
| Holding pressure | kgf/cm² | 800-1000 |
| Max. Injection pressure | kgf/cm² | 1000-1500 |

Comparative and example compositions are shown in Table 4:

**Table 4 - PBT Based Compositions**

| **Component** | **C1.1** | **C1.2** | **E1.3** | **E1.4** | **C1.5** |
|---|---|---|---|---|---|
| PBT | 44.16 | 41.16 | 44.16 | 44.16 | 44.16 |
| PC | 6 | 6 | 6 | 6 | 6 |
| FGF | 45 | 48 | 30 | 20 | |
| HTGF | | | 15 | 25 | 45 |
| AX8900 | 4 | 4 | 4 | 4 | 4 |
| MZP | 0.04 | 0.04 | 0.04 | 0.04 | 0.04 |
| PETS | 0.3 | 0.3 | 0.3 | 0.3 | 0.3 |
| UV | 0.3 | 0.3 | 0.3 | 0.3 | 0.3 |
| Irg1010 | 0.1 | 0.1 | 0.1 | 0.1 | 0.1 |
| Irg168 | 0.1 | 0.1 | 0.1 | 0.1 | 0.1 |
| Total (wt%) | 100 | 100 | 100 | 100 | 100 |

Example compositions E1.3 and E1.4 included both flat glass fibers and high tensile glass fibers. The high tensile glass fibers had a tensile modulus of at least 90 gigapascals (GPa). Comparative compositions C1.1 and C1.2 included only flat glass fiber, and comparative composition C1.5 included only high tensile glass fibers.

Various properties of the Table 4 compositions were evaluated; results are provided in Table 5:

**Table 4. Properties of the PBT based compositions with ultra-high stiffness.**

| **Property** | **Condition** | **Standard** | **Unit** | **C1.1** | **C1.2** | **E1.3** | **E1.4** | **C1.5** |
|---|---|---|---|---|---|---|---|---|
| Bonding strength | T-treatment (Al) | ISO 19095 | MPa | 32.8 | 31.0 | 34.0 | 34.0 | 33.2 |
| Bonding strength | TRI-treatment (Al) | ISO 19095 | MPa | 30.0 | 27.0 | 29.3 | 30.3 | 33.2 |
| Bonding strength | TRI-treatment (Ti) | ISO 19095 | MPa | 30.8 | 26.8 | 29.5 | 33.7 | 34.4 |
| MVR | 275 °C/5 kg | ASTM D1238 | cm³/ 10min | 47 | 32 | 42 | 40 | 28 |
| Notched Izod | 23 °C, 5 lbf/ft | ASTM D256 | J/m | 150 | 202 | 150 | 144 | 136 |
| Notched Izod | -30 °C, 5 lbf/ft | ASTM D256 | J/m | 145 | 196 | 153 | 144 | 126 |
| Un-notched Izod | 23 °C, 5 lbf/ft | ASTM D256 | J/m | 1060 | 1080 | 1010 | 1070 | 1070 |
| HDT | 1.82 MPa, 3.2 mm | ASTM D648 | °C | 212 | 214 | 212 | 210 | 209 |
| Flexural Modulus | 3.2 mm, 1.27 mm/min | ASTM D790 | MPa | 11400 | 12800 | 12300 | 13000 | 14000 |
| Flexural Strength | @break, 3.2 mm | ASTM D790 | MPa | 235 | 252 | 230 | 231 | 232 |
| Tensile Modulus | 5 mm/min | ASTM D638 | MPa | 13000 | 14940 | 14350 | 14600 | 15600 |
| Tensile Strength | @break | ASTM D638 | MPa | 154 | 165 | 153 | 151 | 151 |
| Tensile Elongation | @break | ASTM D638 | % | 2.9 | 2.7 | 2.7 | 2.6 | 2.4 |
| Dk | 1.9 GHz | SABIC Method | / | 3.93 | 3.99 | 3.81 | 3.72 | 3.54 |
| Df | 1.9 GHz | SABIC Method | / | 0.0102 | 0.0103 | 0.0106 | 0.0107 | 0.0109 |
| Warpage | mm | SABIC Method | | <0.1 | <0.1 | <0.1 | <0.1 | >1.85 |

The SABIC Method for determining Dk and Df includes measuring these values using a QWED split post dielectric resonator and an Agilent network analyzer. For the 1.9 gigahertz (GHz) measurement, the minimum sample size is 70 mm x 70 mm with a maximum sample thickness of 4 mm.

Warpage was evaluated on a 100 mm x 100 mm x 2.0 mm molded sample according to a SABIC Method, in which: the sample is placed on a flat surface; a corner of the sample is pressed into the surface elevating the remaining corners; the magnitude of the distance of the other corners to the flat surface is measured; and the maximum distance of the measurements is recorded as the warpage of the sample.

Comparing example compositions E1.3 and E1.4 to comparative composition C1.1, it is seen that with the same glass fiber content, the example compositions including both the flat glass fiber and the high tensile glass fiber ("hybrid glass fiber system") could achieve a much higher flexural modulus. Thus, a lower amount of glass fiber using the hybrid glass fiber system is needed to achieve a similar modulus level as compared to comparative compositions including only one type of glass fiber. This can be observed by comparing C1.2 (48 wt% flat glass fiber and flexural modulus of 12,800 MPa) to E1.3 and E1.4 (45 wt% hybrid glass fiber system and flexural modulus of 12,300 MPa and 13,000 MPa, respectively).

Good dielectric performance is desirable for thermoplastics to be used in the antenna design of smartphones. Typically, a higher glass fiber content results in an increase in the dielectric constant (Dk). However, when the hybrid glass fiber system was used, it was observed that the Dk of the compositions was much lower; compare C1.1 to E1.3 and E1.4. Compositions according to aspects of the disclosure can thus have improved flexural modulus properties and improved dielectric properties (low Dk) as compared to conventional compositions that do not include the hybrid glass fiber system.

Comparative composition C1.5 included only the high tensile glass fiber as a filler. Comparing C1.5 to E1.3 and E1.4, it was seen that the flexural modulus of C1.5 was higher, but impact strength (notched Izod impact strength) was lower than the example compositions. Additionally, the warpage properties of the example compositions were significantly improved as compared to comparative composition C1.5. The results can be visually observed in FIG. 1. Nearly no warpage was observed in the samples of E1.3 and E1.4, but in the sample of C1.5, at least one coin (1.85 mm thickness) could be inserted into the warped area.

From the results it is seen that PBT-based compositions including a hybrid glass fiber system (a combination of flat glass fiber and high tensile glass fiber) had high modulus, low Dk, good warpage properties, and good processing performance. Such compositions are suitable for use in thinner smartphone designs.

The example compositions also had improved tensile modulus (TM) properties as compared to the comparative compositions that include the same content of flat glass fiber instead of the hybrid glass fiber system. Compare, e.g., E1.3 and E1.4 to C1.1 which includes same content of only FGF (TM 14.35 GPa and 14.6 GPa vs. 13 GPa). It was observed that tensile modulus could be increased by increasing the content of flat glass fiber, but at the expense of lower bonding strength and higher Dk, as seen when comparing C1.2 to C1.1. It was further observed that tensile modulus could be significantly improved by using only a high tensile glass fiber (C1.5, TM 15.6 GPa), but MVR and NII were reduced as compared to E1.3 and E1.4 which included the hybrid glass fiber system.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 35 wt% to about 80 wt% of a polybutylene terephthalate (PBT) resin;
b) from about 3 wt% to about 15 wt% of an amorphous resin;
c) from about 10 wt% to about 45 wt% of a flat glass fiber;
d) from about 10 wt% to about 45 wt% of a high tensile strength glass fiber having a tensile modulus of at least 90 gigapascals (GPa) as evaluated in accordance with ASTM D2343, wherein the high tensile strength glass fiber is different from the flat glass fiber; and
e) from about 2 wt% to about 10 wt% of an impact modifier,
wherein the combined weight percent value of all components does not exceed 100 wt%, and all weight percent values are based on the total weight of the composition.

2. The thermoplastic composition according to claim 1, wherein the PBT resin comprises virgin PBT, chemically upcycled PBT, mechanically recycled PBT, or a combination thereof.

3. The thermoplastic composition according to claim 1 or 2, wherein the amorphous resin comprises polycarbonate, polyetherimide, copolymers thereof, or a combination thereof.

4. The thermoplastic composition according to claim 3, wherein the polycarbonate comprises virgin polycarbonate, post-consumer recycled polycarbonate, a polycarbonate copolymer, or a combination thereof.

5. The thermoplastic composition according to any one of claims 1 to 4, wherein the flat glass fiber comprises E-glass fiber.

6. The thermoplastic composition according to any one of claims 1 to 5, wherein the flat glass fiber has an aspect ratio of greater than 2.

7. The thermoplastic composition according to any one of claims 1 to 6, wherein the impact modifier comprises ethylene-methyl acrylate-glycidyl methacrylate (E-MA-GMA) terpolymer, ethylene-glycidyl methacrylate (E-GMA) copolymer, styrene-ethylene-butylene-styrene (SEBS), ethylene-acrylic acid zinc ionomer, or a combination thereof.

8. The thermoplastic composition according to any one of claims 1 to 7, wherein the composition further comprises from greater than 0 wt% to about 10 wt% of at least one additional additive, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, an additional reinforcing agent, or a combination thereof.

9. The thermoplastic composition according to any one of claims 1 to 8, wherein the high tensile strength glass fiber has a dielectric constant (Dk) of less than 6 as evaluated according to ASTM D150 at a frequency of from 1-10 gigahertz (GHz).

10. The thermoplastic composition according to any one of claims 1 to 9, wherein a weight ratio of the flat glass fiber to the high tensile strength glass fiber is from 1:5 to 5:1.

11. The thermoplastic composition according to any one of claims 1 to 10, wherein the composition has a metal bonding strength of at least 28 megapascals as evaluated according to ISO 19095 using a T-treatment or TRI-treatment.

12. The thermoplastic composition according to any one of claims 1 to 11, wherein the composition has:
a flexural modulus of at least 12 gigapascals (GPa) as evaluated according to ASTM D790 at a sample thickness of 3.2 millimeters (mm) and a speed of 1.27 mm per minute, or
a tensile modulus of at least 13 GPa as evaluated according to ASTM D638 at a test speed of 5 millimeters per minute.

13. The thermoplastic composition according to any one of claims 1 to 12, wherein the composition has a dielectric constant of no more than 3.9 as evaluated according to the SABIC Method at 1.9 gigahertz (GHz).

14. The thermoplastic composition according to any one of claims 1 to 13, wherein the composition has a warpage no more than 1.8 mm as evaluated according to the SABIC Method.

15. An article comprising the thermoplastic composition according to any one of claims 1 to 14, wherein the article is a component of a smartphone.
